# EUROPÄISCHE PATENTANMELDUNG

(11) **EP 1 887 405 A1**
(43) Veröffentlichungstag der Anmeldung: **13.02.2008**
(21) Anmeldenummer: 07013534.8
(22) Anmeldetag: 11.07.2007
(51) Int. Cl.: G02B 23/12

(54) **Optische Beobachtungsvorrichtung, Fernbedienung sowie Beobachtungssystem mit Bildaufzeichnungsfunktion**

(30) Priorität: 10.08.2006 DE 102006037599; 09.08.2006 DE 102006037387
(71) Anmelder: Carl Zeiss Sports Optics GmbH, 35576 Wetzlar (DE)
(72) Erfinder: Schreiter, Gerd, 35781 Weilburg (DE); Becker, Kurt, 35435 Wettenberg (DE)
(74) Vertreter: Böhmer, Sabine

(57) **Zusammenfassung**

Die Erfindung betrifft eine optische Beobachtungsvorrichtung, eine Fernbedienung sowie ein System aus Beobachtungsvorrichtung und Fernbedienung,

Die Optische Beobachtungsvorrichtung mit Bildaufzeichnungsfunktion umfasst zumindest einen Fernrohrtubus, wobei jeder Fernrohrtubus einen Strahlengang durch ein Objektiv und ein Okular aufweist und eine dem Fernrohrtubus zugeordnete Sensorbaugruppe zum Auskoppeln und Umwandeln eines Teillichtstrahles in digitale Bilddaten. Zudem ist eine Kameraelektronikbaugruppe (9) zur Konvertierung und Komprimierung der digitalen Bilddaten der Sensorbaugruppe vorgesehen, wobei die Kameraelektronikbaugruppe (9) eine Konlmunikationsschnittstelle (10) aufweist, die geeignet ist mit einer weiteren Kommunikationschnittstelle(16), insbesondere einer Kommunikationsschnittstelle (16) einer externen Fernbedienung (l.1), zur digitalen Datenübertragung zusammenzuwirken. DieFernbedienung (11) umfasst eine Kommunikationsscltnittstelle (16), die geeignet ist mit einer Kommunikationsschnittstelle (10) der externen optischen Beobachtungsvorrichtung (1) zur digitalen Datenübertragung zusammenzuwirken, sowie eine haptische Bedieneinrickttuxag (15) zur Eingabe und/oder Auswahl von Bedienfunktionen ,einen Mikroprozessor (24) zur Datenverarbeitung ein- und ausgehender Daten, eine Speichereinheit (17) zur Speicherung der digitaler Daten, und ein Display (14) zur Darstellung der digitalen Daten, insbesondere digitaler Bilddaten sowie Angaben zur Eingabe und/oder Auswahl von Bedienfunktionen.

Damit kann die schlanke und leichte Form eines Fernglases oder Fernrohres beibehalten werden. Zudem kann eine leichte und kleine Fernbedienung realisiert werden.

## Beschreibung

Die Erfindung betrifft eine optische Beobachtungsvorrichtung, eine Fernbedienung sowie ein Beobachtungssystem mit Bildaufzeichnungsfunktion.

Aus der US 6,067,190 ist ein Fernglas bekannt, bei dem die Elektronik im Fernglas selber angeordnet ist. Nachteilig hieran ist der erhebliche Bauraumbedarf, insbesondere zur Unterbringung von Display, Bedieneinheiten und Speicherkarten. Dadurch kann das übliche Design eines Fernglases mit beweglicher Knickbrücke - sowie gewichts- und bauraum-optimierter Gestaltung nicht beibehalten werden.

Aus der DE 102 453 95 A1 ist ein Fernglas mit einer Einrichtung zur Auskopplung eines Teillichtbündels bekannt. Ein Modul mit einem Bildsensor zur Umwandlung von Bildern in digitale Daten ist derart an einem Gehäuse eines Tubus angebracht, dass eine Auskopplung eines optischen Signals auf dem Bildsensor möglich ist. Zudem ist eine vollständig autarke Digitalkamera offenbart, die mit dem am Fernglas angebrachten Modul verbunden ist. Damit Sensordaten von dem Fernglas auf die Kamera übertragen werden können, ist ergänzend eine solche Kamera mit entsprechenden spezifischen Kommunikationsschnittstellen zu versehen. Weiterhin ist sie zum Zwecke der Fernsteuerung eines Sensors entsprechend zu modifizieren ( spezielles Übertragungsprotokoll für Sensordaten und Steuerbefehle). Die Bildaufnahme ist von der Kamera aus auszulösen, während gleichzeitig das Fernglas in ausgerichteter Position zu halten ist. Die gleichzeitige Bedienung zweier Geräte kann bei unsicheren Benutzern zu unscharfen Bildern führen.

Der Inhalt der DE 102 453 95 A1 wird hiermit in diese Anmeldung mit aufgenommen.

Die Aufgabe der Erfindung ist eine optische Beobachtungsvorrichtung, eine Fernbedienung sowie ein Beobachtungssystem mit Bildaufzeichnungsfunktion zur Verfügung zu stellen. Dabei sollen nur in begrenztem Umfang Elektronikkomponenten in der optischen Beobachtungsvorrichtung vorgesehen sein. Damit kann die schlanke und leichte Form eines Fernglases oder Fernrohres beibehalten werden.

Die Aufgabe wird gelöst durch die Merkmale der Ansprüche 1 sowie 12 und 16.

Die Vorteile der Erfindung bestehen darin, dass
1. anstelle einer vollständigen Kamera gemäß DE 102 453 95 A1 eine einfache Fernbedienung (Remote Control) vorgesehen ist. Diese kann leichter und kleiner als eine vollständige Kamera ausgeführt werden, da auf wesentliche Kameraelemente, so z.B. ein Bildsensor samt Optik, Kameraelektronik (AD-Wandlung, Image Pipe, Sensorsteuerung,...) in der Fernbedienung verzichtet werden kann.
2. die wesentliche Kameraelektronik in einer Kameraelektronikbaugruppe in der optischen Beobachtungsvorrichtung eingebaut ist. Durch die Verlagerung der voluminösen Bauelemente wie Display und Bedienfeld in die Fernbedienung kann die herkömmliche Fernglasform beibehalten oder nur geringfügig davon abgewichen werden. So kann u.a. die Knickbrücke beibehalten werden. In der Beobachtungsvorrichtung wird bevorzugt auf die Komponenten, die erheblichen Bauraum beanspruchen verzichtet, z.B. Display und Bedienfeld.

Bei der erfindungsgemäßen Beobachtungsvorrichtung und Fernbedienung werden Bild- und/oder Videodaten von der optischen Beobachtungsvorrichtung auf die Fernbedienung übertragen. Zudem werden Steuerdaten von der Fernbedienung auf die optische Beobachtungsvorrichtung zur Steuerung der Kameraelektronikbaugruppe übertragen.

Die erfindungsgemäße Aufteilung einer Kamera in eine Kameraelektronikbaugruppe in der optischen Beobachtungsvorrichtung einerseits und in eine Fernbedienung andererseits ermöglicht den Datenaustausch unter Beibehaltung von Standardformaten und Standardprotokollen. Es ist eine kabellose Verbindung zwischen Beobachtungsvorrichtung und Fernbedienung möglich, da konvertierte und komprimierte Sensordaten übertragen werden. Da die Sensoransteuerung und das Sensorauslesen störungsempfindliche Echtzeitprozesse darstellen, ist eine Remote-Anbindung ohne vorherige Konvertierung und Komprimierung der Sensordaten störanfällig.

Eine beidhändige Bedienung der optischen Beobachtungsvorrichtung ist einfach möglich. Zum Auslösen einer Aufnahme kann eine an der Beobachtungsvorrichtung angebrachte Auslösetaste bedient werden. Das abgesetzte Mobilteil (Fernbedienung) wird zu Beobachtung und Bildaufnahme nicht benötigt und kann entsprechend am Gürtel oder in der Tasche des Benutzers aufbewahrt werden.

Ein weiterer Vorteil der Erfindung besteht darin, dass die optische Beobachtungsvorrichtung auch ohne die separate Kameraeimichtung eingesetzt werden kann. Es handelt sich dann um einen Einsatz als rein visuelles Beobachtungsinstrument,

Die Stromaufnahme der Elektronik in der Beobachtungsvorrichtung kann durch die Verlagerung von Komponenten mit hohem Stromverbrauch in die Fernbedienung reduziert werden, so dass sich längere Betriebsdauern ergeben.

Die Fernbedienung kann ein eigenständiges Gerät sein, z.B. in Form einer Bedien- und Wiedergabekonsole. Die Fernbedienung kann aber auch Bestandteil eines weiteren elektronischen Geräts, insbesondere mobilen Endgeräte, z.B. Handcomputer (PDA, Personal Digital Assistant), Mobiltelefon (Handy) oder Mobilrechner (Laptop, Notebook) sein. Bei der Ausführung einer Fernbedienung in den elektronischen Geräten kann dann auf bereits vorhandene Displays, Bedienfelder und Schnittstellen insbesondere Kommunikationsschnittstellen zurückgegriffen werden.

In der optischen Beobachtungsvorrichtung kann ein mechanischer Shutter als Verschluss und zur Blendeneinstellung vorgesehen sein. Des Weiteren kann zumindest eine optisches Element, beispielsweise eine Linse, zur Anpassung des Bildfeldes an die Größe des Bildsensors vorgesehen sein.

Vorteilhafte Ausführungsformen der Erfindung sind in den Unteransprüchen angegeben.

In einer vorteilhaften Ausführungsform umfasst die Sensorbaugruppe der Beobachtungsvorrichtung einen Bildsensor und eine Bildsensorschnittstelle. Wird beispielsweise ein CCD-Sensor verwendet, so arbeitet die Bildsensorschnittstelle der Sensorbaugruppe mit einer Bildsensorschnittstelle der Kameraelektronikbaugruppe zum Auslesen von Daten aus dem Bildsensor und zum Ansteuern des Bildsensors, beispielsweise für ein Zurücksetzen (reset) oder Start-Ende-Auslesen zusammen. Im Falle eines CMOS-Sensors kann auf die beiden Bildsensorschnittstellen verzichtet werden. Der CMOS-Sensor kann dann direkt mit dem Mikroprozessor der Kameraelektronikbaugruppe zusammenwirken.

In einer vorteilhaften Ausführungsform ist die Beobachtungsvorrichtung mit einer Auslöseeinheit, insbesondere einem Schalter, zum Auslösen einer Aufnahme eines Photos oder zum Auslösen und Beenden einer Videosequenz ausgebildet. Die Auslöseeinheit arbeitet dabei mit der Kameraelektronikbaugruppe zusammen.

Die Kameraelektronikbaugruppe in einer bevorzugten Ausführungsform einen Mikroprozessor umfasst. Dieser Mikroprozessor ermöglicht eine digitale Signalverarbeitung übertragener Daten. Hierzu kann eine zugeordnete Verarbeitungseinheit, d.h. eine DSP-Einheit (Digital Signal Processing, digitale Signalverarbeitung) vorgesehen sein. Als Signalverarbeitung ausgelesener Bilddaten kann beispielsweise ein Weißabgleich oder eine Schärfung oder eine sonstige Vorverarbeitung vorgesehen sein. In diesem Zusammenhang kann eine Image-Pipe oder eine H3A-Engine Verwendung finden. Der Mikroprozessor verfügt über internen oder externen Arbeitsspeicher. Ihm kann des Weiteren zusätzlicher interner oder externer Speicher zum temporären Ablegen von Bild- oder Videodaten zugeordnet sein. Der Mikroprozessor ermöglicht das Konvertieren und Komprimieren von aus dem Bildsensor ausgelesenen Bild- oder Videodaten (raw data) in ein Standardformat, z.B. JPEG, TIF, MPEG. Im Mikroprozessor oder in separaten Bausteinen wird das Standardformat dann in ein Standardübertragungsprotokoll zur Übertragung an die Fernbedienung eingepackt. Als Standardübertragungsprotokolle können beispielsweise Wireless, USB oder WLAN Verwendung finden.

Die Kameraelektronikbaugruppe ist bevorzugt innerhalb des Fernglasgehäuses integriert. Dort ist sie geschützt gegen Witterungseinflüsse und Verschmutzung angeordnet.

Unter der optischen Beobachtungsvorrichtung werden bevorzugt Fernrohre, Ferngläser, Spektive, Zielfernrohre und Periskope verstanden. Es sind aber auch weitere, insbesondere vergrößernde Beobachtungsvorrichtungen, vorstellbar.

Die Mensch-Maschine-Schnittstelle (HMI Control) kann sowohl das Display als auch die haptische Bedieneinrichtung (user interface) umfassen. Es kann auch vorgesehen sein das Display als berührungsempfindliche Fläche (Touchpad) auszubilden. Display und Bedienfeld dienen der Eingabe und/oder Auswahl von Bedienfunktionen. Auf dem Display der Fernbedienung können sowohl Bilder und Videosequenzen abgespielt werden als auch Statusanzeigen eines Menuprogramms zur Information und/oder Auswahl angezeigt werden. In dem Mikroprozessor der Fernbedienung sind eine Menusoftware und deren Ablauf gespeichert.

Mit der Bedieneinrichtung können beispielsweise Eingaben zur Belichtungszeit, zum Weißabgleich und sonstige Settings getätigt und diese dann auf dem Display abgelesen werden. Von der Fernbedienung können dann über eine Übertragungseinheit die Befehle an die Kameraelektronikbaugruppe übertragen werden.

In einer bevorzugten Ausführungsform der Fernbedienung ist die Speichereinheit als Wechselspeicher, insbesondere als Sichere Digitale Speicherkarte ausgebildet. Es kann aber auch ein Festplattenspeicher vorgesehen sein.

### Figurenbeschreibung

Im folgenden wird die Erfindung anhand bevorzugter Ausführungsformen wiedergegeben.

Es zeigen
- Figur 1:: eine Ausführungsform der erfindungsgemäßen optischen Beobachtungsvorrichtung,
- Figur 2:: eine Ausführungsform der erfindungsgemäßen Fernbedienung,
- Figur 3:: ein schematisches Blockdiagramm von der optischen Beobachtungsvorrichtung und der Fernbedienung (Beobachtungssystem), und
- Figur 4:: eine weitere Ausführungsform der erfindungsgemäßen optischen Beobachtungsvorrichtung.

Das erfindungsgemäße modulare System zur visuellen Beobachtung (Fernglasfunktion) und gleichzeitiger digitaler Bildaufnahme und Bildspeicherung (Kamerafunktion) wird anhand der Figuren erläutert.

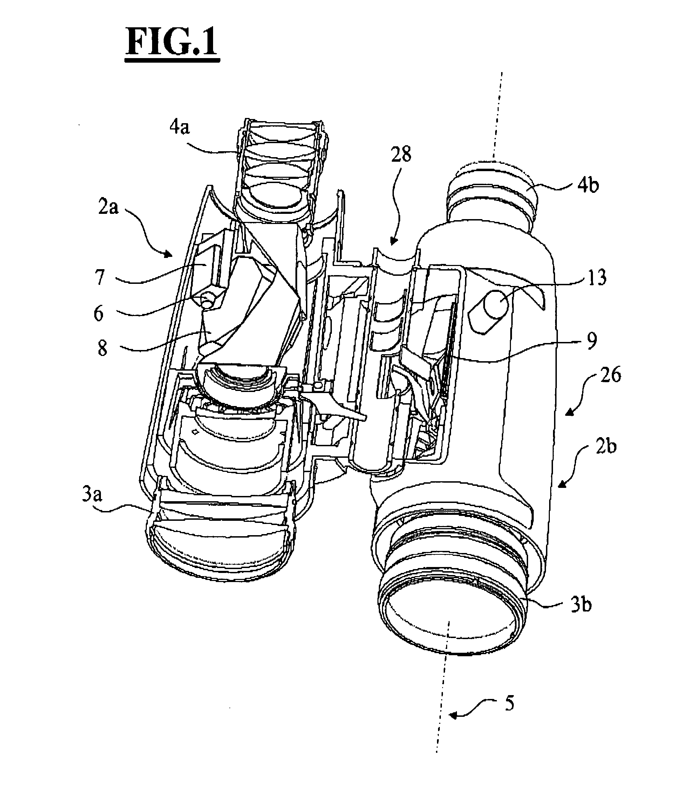

Figur 1 zeigt eine erfindungsgemäße optische Beobachtungsvorrichtung 1 in Form eines Fernglases mit zwei Fernrohrtuben 2a und 2b.

Das Fernglas dient der visuellen Beobachtung und enthält zusätzlich eine Kameraelektronikbaugruppe zur Aufnahme, Verarbeitung, Komprimierung und Weiterleitung von digitalen Bilddaten.

Der optische Strahlengang kann auf verschiedene Weise in einen visuellen und einen digitalen Kanal aufgeteilt werden. In der Figur 1 erfolgt dies durch Auskopplung an einer auf einem Prisma 8 aufgebrachten Teilerschicht. Hierdurch wird der Strahlengang aufgezweigt und eine Abbildung auf einen Bildsensor 6 projiziert. Es sind aber auch Auskopplungen über Klappspiegel möglich. Des Weiteren kann auch ein separates Objektiv im Fernglas für die Anbindung eines Bildsensors verwendet werden.

Jeder Tubus 2a und 2b weist ein Objektiv 3a und 3 b sowie ein Okular 4a und 4b auf. Zum rechten Tubus 2b ist die optische Achse 5 eingezeichnet. Jeder Fernrohrtubus 2a und 2b weist einen -nicht eingezeichneten- Strahlengang durch sein zugehöriges Objektiv und Okular auf. Im linken Tubus 2a ist eine Sensorbaugruppe dargestellt mit einem Bildsensor 6, hier ein CCD-Sensor, und einer CCD-Steuerung 7. Über eine Prismeneinrichtung 8 wird ein Teilstahl zum Bildsensor 6 hin ausgekoppelt. Um ein scharfes Bild zu erlangen wird bevorzugt im Bereich einer Zwischenbildebene ausgekoppelt. Eine Kameraelektronikbaugruppe 9 ist im rechten Fernrohrtubus 2a angeordnet. Diese Kameraelektronikbaugruppe 9 ermöglicht das Ansteuern und Auslesen des Bildsensors 6, sowie die Bildverarbeitung, Bildkomprimierung und Speicherung in einem Arbeitsspeicher.

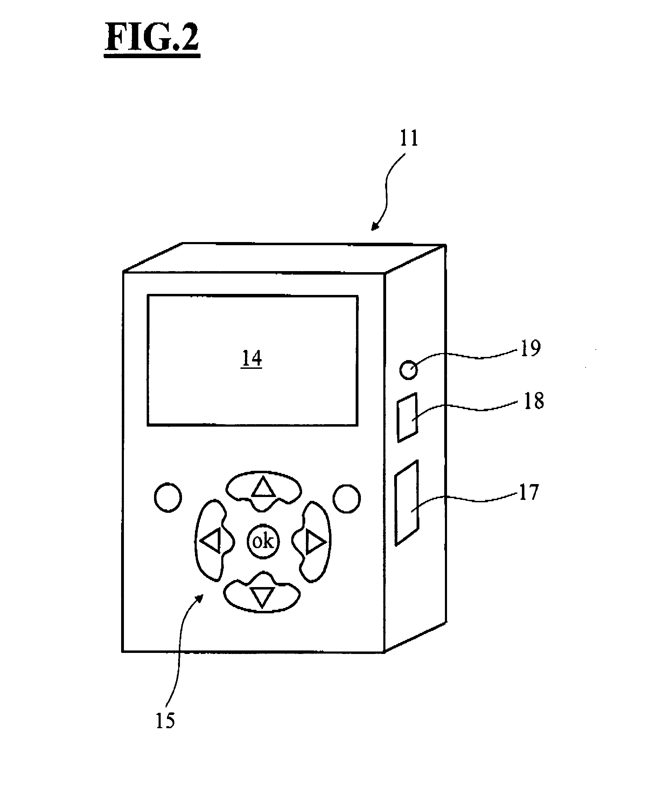

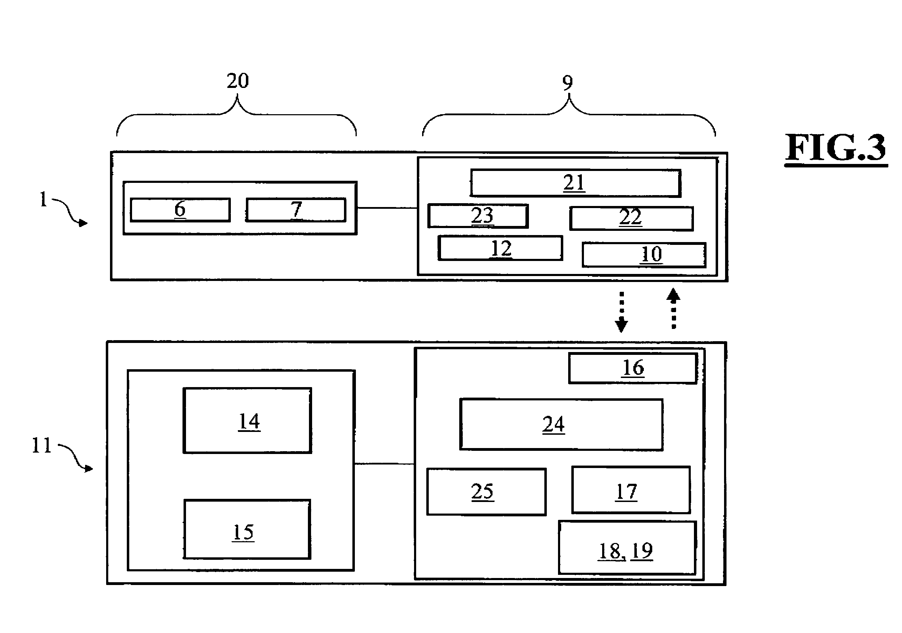

Diese Kameraelektronikbaugruppe enthält des Weiteren eine in Figur 3 dargestellte Kommunikationsschnittstelle 10 für eine bevorzugt drahtlose Kommunikation mit einer in Figur 2 dargestellten Fernbedienung 11 sowie eine Spannungsversorgung 12 -in Figur 3 dargestellt. Anstelle einer drahtlosen Kommunikation kann auch eine leitungsgebundene Kommunikation vorgesehen sein.

Mit einer Auslöseeinheit 13 kann die Aufnahme eines Bildes oder der Beginn und das Ende einer Videosequenz ausgelöst werden. Diese Auslöseeinheit befindet sich am Außengehäuse des Fernglases in Form einer Bedientaste zur Auslösung der Bildaufnahme. Nach Betätigen der Auslösetaste 13 wird das Bild auf dem Bildsensor 6 aufgenommen und über die CCD-Steuerung 7 vom Microprozessor 21 ausgelesen. Die Bilddaten werden dann vom digitalen Signalprozessor DSP bearbeitet (H3A-Engine) und in ein Standardformat (z.Bsp. JPEG) komprimiert. Das jetzt entstandene File wird automatisch über die Kommunikationsschnittstelle (Communication Controller) 10 über eine in der Regel kabellose Verbindung (z. Bsp. wireless USB) zur Fernbedienung 11 übertragen. Die Einstellungen zur Bildaufnahme wie Belichtungszeit, Weißabgleich, Blendenwahl, werden bereits vor einer Bildaufnahme von der Fernbedienung 11 über die kabellose Verbindung zum Fernglas 1 übertragen,

Eine bevorzugte Ausführungsform der mobilen Fernbedienung 11 ist in Figur 2 schematisch wiedergegeben.

Die mobile Fernbedienung 11 dient zum einen als Bedien-, Speicher- und Wiedergabekonsole für die Kamerafunktion der optischen Beobachtungsvorrichtung 1, d.h. es können Bild- und Videodaten gespeichert und/oder auf einem Display 14 wiedergegeben werden. Die Fernbedienung kann Daten empfangen, speichern und weiterverarbeiten. Zum anderen dient die Fernbedienung 11 als Steuereinheit für die Kamerafunktion des Kameramoduls im Fernglas mit Ausnahme der Auslösung der Bildaufnahme, welche im Fernglas integriert ist. Es kann aber eine auch eine Auslösung der Bildaufnahme über die Fernbedienung 11 vorgesehen sein. Alle Kameraeinstellungen können mittels eines Bedienfeldes 15 auf dem Mobilteil 11 durchgeführt werden. Dabei kann das Menü auf dem Display 14 für eine Menüsteuerung der Kamerafunktion dargestellt und die entsprechenden Settings über die Kommunikationsschnittstelle 16 der Fernbedienung 11 -siehe Figur 3- zum Fernglas 1 übertragen werden.

Das Bedienfeld 15 wird über eine HMI-Control-Einheit gesteuert. Hier werden Funktionen wir Bildauswahl, Bilddarstellung, Thumbnail-Darstellung, Löschen,... aber auch die Settings der Kamera wie Einstellung von Bildaufnahme-Folge, Weißabgleich, Belichtungszeit etc. vorgenommen.

Die aufgenommenen, verarbeiteten und komprimierten Bilddaten werden von dem Fernglas 1 automatisch auf das Mobilteil 11 zur Speicherung und/oder Darstellung übertragen. Die Fernbedienung 11 enthält hierzu neben der Kommunikationsschnittstelle 16 einen Speicher 17, zum Beispiel in Form einer Sicheren Digitalen Speicherkarte (SD Card) zum Abspeichern von komprimierten Bilddateien. Zudem können externe Schnittstellen 18 vorgesehen sein für weitere Übertragung der Bilddaten (USB, Video out,...). Des Weiteren kann eine Steuerelektronik für die Funktionsmodule inklusive der Spannungsversorgung vorgesehen sein. Mit 19 ist ein Gleichspannungseingang bezeichnet.

In Figur 3 ist schematisch anhand eines Blockdiagrammes das Zusammenwirken von optischer Beobachtungsvorrichtung 1 und Fernbedienung 11 dargestellt.

Das obere Schaltbild stellt die Beobachtungsvorrichtung dar. Im linken Bereich ist die Sensorbaugruppe 20 dargestellt, die einen CCD-Sensor 6 und eine CCD-Steuerung 7 (CCD Controller) umfasst. Der CCD-Controller 7 dient der Aufbereitung und Weiterleitung des Sensorsignals.

Die Kameraelektronikbaugruppe 9 weist einen Mikroprozessor 21 zur digitalen Signalverarbeitung auf. Der Mikroprozessor 21 kann einen Digitalen Signalprozessor umfassen oder mit einem solchen in Verbindung stehen. Zudem ist ein Arbeitsspeicher 22 (SD-RAM) des Mikroprozessors vorgesehen. Die Übertragung von Daten von und zu der Sensorbaugruppe 20 erfolgt über eine CCD-Schnittstelle 23. Im Falle eines CMOS- Sensors entfällt die Sensorsteuerung 7.

Der Austausch von Daten mit der Fernbedienung 11 erfolgt über die Kommunikationsschnittstelle 10 der Kamerabaugruppe 9 und die Kommunikationsschnittstelle 16 der Fernbedienung 11. Der Datenaustausch ist durch die Pfeile angedeutet.

Die Kommunikationsschnittstelle (Communication Controller) kann separat oder im Microprozessor 21 integriert sein und dient zum Empfang von komprimierten digitalen Bilddaten vom Fernglas und zur bidirektionalen Kommunikation von Steuerdaten für die Kamera. Er setzt das jeweils verwendete Kommunikationsprotokoll, z.B. wireless USB um.

Das untere Schaltbild zeigt die Fernbedienung 11. Die Fernbedienung 11 weist weiterhin einen Mikroprozessor 24 zur Datenverarbeitung auf, sowie eine Spannungsversorgungseinrichtung 25 zur Versorgung der Fernbedienung 11 mit Spannung. Der Mikroprozessor 24 dient der Steuerung der externen Schnittstellen 18 und 19, Speicherverwaltung, Ansteuerung des Displays 14 und der Bedieneinheit 15.

Zur Speicherung der von der Kameraelektronikbaugruppe 9 auf die Fernbedienung 11 übermittelten Daten dient der Speicher 17.

Als die externen weiteren Schnittstellen 18 und 19 können z.B. ein Universal Serial Bus (USB), eine Rot-Grün-Blau-Schnittstelle (RGB) sowie ein Gleichspannungseingang für die Spannungsversorgung (DC in) vorgesehen sein.

Die Bilddaten können auf einem Memory-Baustein (z.Bsp. SD-Card) abgespeichert und können von dort abgerufen und auf dem Display 14 dargestellt oder über die externen Schnittstellen 18 und 19 weitertransportiert werden.

Ein integriertes Power Supply stellt die batteriegestützte Versorgungsspannung für die mobile Fernbedienung zur Verfügung.

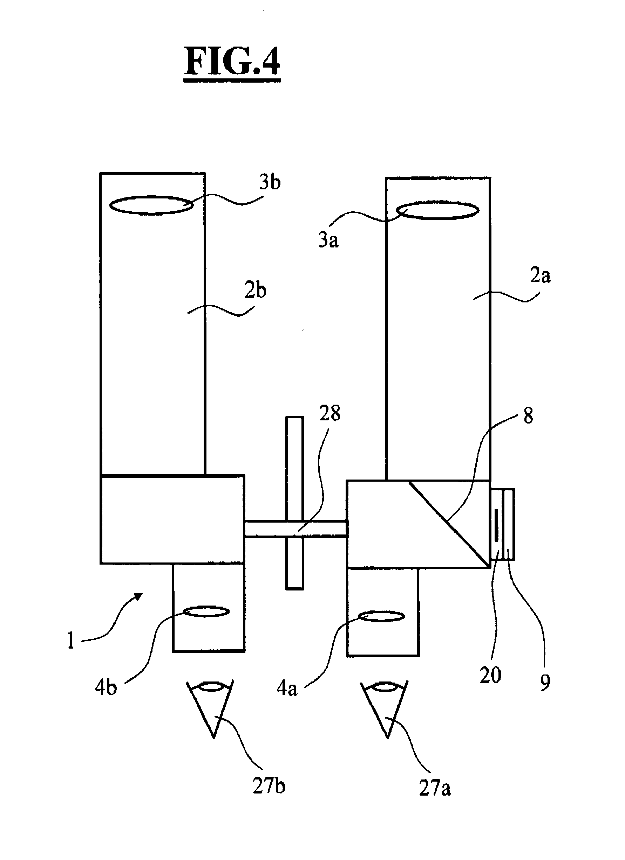

In Figur 4 ist schematisch eine weitere Ausführungsform der erfindungsgemäßen optischen Beobachtungsvorrichtung wiedergegeben.

Es ist ein Fernglas 1 dargestellt mit zwei Fernrohrtuben 2a und 2b mit Objektiven 3a und 3b sowie Okularen 4a und 4b. Mit 27a und 27b sind die Augen eines Benutzers bezeichnet. Die beiden Tuben 2a und 2b sind über eine Knickbrücke 28 miteinander verbunden. Ein durch das Objektiv 3a eintretender -nicht dargestellter- Lichtstrahl verläuft durch den Tubus 2a und wird an dem Strahlteiler 8 in zwei -nicht dargestellte- Teillichtstrahlen aufgespalten. Es kann eine Prismeneinrichtung, ein Schwenkspiegel, ein Kippspiegel oder eine sonstige zur Strahlaufteilung geeignete Einrichtung Verwendung finden. Der erste Teillichtstrahl verläuft weiter durch das Okular 4a zum linken Auge 27a des Benutzers. Der zweite Teillichtstrahl wird an der Prismeneinrichtung zu der Sensorgruppe 20 hin abgelenkt. Neben der Sensorgruppe 20 ist die Kameraelektronikgruppe 9 angeordnet. Die beiden Gruppen 9 und 20 können aber auch einen Abstand voneinander aufweisen, wie in Figur 1 dargestellt. Da die beiden Gruppen 9 und 20 nur geringen Bauraum in Anspruch nehmen kann dieses Fernglas von einem herkömmlichen -nicht dargestellten- Gehäuse ummantelt werden.

### Bezugszeichenliste

- 1.: optische Beobachtungsvorrichtung, Fernglas
- 2a: linker Fernrohrtubus
- 2b: rechter Fernrohrtubus
- 3a: linkes Objektiv
- 3b: rechtes Objektiv
- 4a: linkes Okular
- 4b: rechtes Okular
- 5: optische Achse
- 6: Bildsensor
- 7: CCD-Steuerung
- 8: Prismeneinrichtung
- 9: Kameraelektronikbaugruppe
- 10: Kommunikationsschnittstelle
- 11: Fernbedienung
- 12: Spannungsversorgung
- 13: Auslöseeinheit
- 14: Display
- 15: Bedienfeld
- 16: Kommunikationssehnittstelle
- 17: Speicher
- 18: externe Schnittstelle
- 19: Gleichspannungseingang
- 20: Sensorbaugruppe
- 21: Mikroprozessor
- 22: Arbeitsspeicher
- 23: CCD-Schnittstelle
- 24: Mikroprozessor
- 25: Spannungsversorgungseinrichtung
- 26: Gehäuse
- 27a: linkes Auge eines Benutzers
- 27b: rechtes Auge eines Benutzers
- 28: Knickbrücke

## Patentansprüche

1. Optische Beobachtungsvorrichtung mit Bildaufzeichnungsfunktion , umfassend
- zumindest einen Fernrohrtubus, wobei jeder Fernrohrtubus einen Strahlengang durch ein Objektiv und ein Okular aufweist, und
- eine dem Fernrohrtubus zugeordneten Sensorbaugruppe zum Auskoppeln und Umwandeln eines Teillichtstrahles in digitale Bilddaten,
**dadurch gekennzeichnet, dass**
eine Kameraelektronikbaugruppe (9) zur Konvertierung und Komprimierung der digitalen Bilddaten der Sensorbaugruppe vorgesehen ist, wobei die Kameraelektronikbaugruppe (9) eine Kommunikationsschnittstelle (10) aufweist, die geeignet ist mit einer weiteren Kommunikationschnittstelle (16), insbesondere einer Kommunikationsschnittstelle (16) einer externen Fernbedienung (11), zur digitalen Datenübertragung zusammenzuwirken.

2. Beobachtungsvorrichtung nach Anspruch 1, **dadurch gekennzeichnet, dass** die Sensorbaugruppe (20) einen Bildsensor (6) mit oder ohne einer Bildsensorsteuerung (7) umfasst.

3. Beobachtungsvorrichtung nach Anspruch 2, **dadurch gekennzeichnet, dass** der Bildsensor (6) ein CCD-Sensor oder ein CMOS-Sensor ist.

4. Beobachtungsvorrichtung nach einem der vorangehenden Ansprüche, **dadurch gekennzeichnet, dass** die Kameraelektronikbaugruppe (9) mit einer Auslöseeinheit (13), insbesondere einem Schalter, zum Auslösen einer Bildaufnahme oder zum Starten und Stoppen einer Videoaufnahme verbunden ist.

5. Beobachtungsvorrichtung nach einem der vorangehenden Ansprüche, **dadurch gekennzeichnet, dass** die Kameraelektronikbaugruppe (9) eine Bildsensorschnittstelle (23) umfasst, die geeignet ist mit der Bildsensorsteuerung (7) der Sensorbaugruppe (20) zusammenzuwirken.

6. Beobachtungsvorrichtung nach einem der vorangehenden Ansprüche, **dadurch gekennzeichnet, dass** die Kameraelektronikbaugruppe (9) einen Mikroprozessor (21) zur digitalen Signalverarbeitung übertragener Daten, wobei dem Mikroprozessor (21) insbesondere ein Arbeitsspeicher (22) zugeordnet ist, umfasst.

7. Beobachtungsvorrichtung nach Anspruch 6, **dadurch gekennzeichnet, dass** der Mikroprozessor (21) zur Konvertierung und Komprimierung der zu übertragenden Bilddaten ausgebildet ist.

8. Beobachtungsvorrichtung nach einem der vorangehenden Ansprüche, **dadurch gekennzeichnet, dass** die Kameraelektronikbaugruppe (9) eine Spannungsversorgungseinrichtung (12) umfasst.

9. Beobachtungsvorrichtung nach einem der vorangehenden Ansprüche, **dadurch gekennzeichnet, dass** die Kameraelektronikbaugruppe (9) ganz oder zumindest teilweise innerhalb eines Gehäuses (26) der optischen Beobachtungseinrichtung (1) fest oder auswechselbar angeordnet ist.

10. Beobachtungsvorrichtung nach einem der vorangehenden Ansprüche 1 bis 8 **dadurch gekennzeichnet, dass** die Kameraelektronikbaugruppe (9) fest oder auswechselbar außerhalb des Gehäuses (26) an der optischen Beobachtungseinrichtung (1) angeordnet ist.

11. Beobachtungsvorrichtung nach einem der vorangehenden Ansprüche, **dadurch gekennzeichnet, dass** die Beobachtungseinrichtung (1) als Fernglas, Fernrohr, Spektiv oder Zielfernrohr ausgebildet ist.

12. Fernbedienung, geeignet für eine externe optische Beobachtungsvorrichtung mit Bildaufzeichnungsfunktion, insbesondere für eine Beobachtungsvorrichtung (1) nach einem der Ansprüche 1 bis 11, umfassend
- eine Kommunikationsschnittstelle (16), die geeignet ist mit einer Kommunikationsschnittstelle (10) der externen optischen Beobachtungsvorrichtung (1) zur digitalen Datenübertragung zusammenzuwirken,
- eine haptische Bedieneinrichtung (15) zur Eingabe und/oder Auswahl von Bedienfunktionen,
- einem Mikroprozessor (24) zur Datenverarbeitung ein- und ausgehender Daten,
- eine Speichereinheit (17) zur Speicherung der digitalen Daten, und
- ein Display (14) zur Darstellung der digitalen Daten, insbesondere digitaler Bilddaten sowie Angaben zur Eingabe und/oder Auswahl von Bedienfunktionen.

13. Fernbedienung nach Anspruch 12, **dadurch gekennzeichnet, dass** zumindest eine weitere Schnittstelle (18, 19), insbesondere eine USB- und/oder Video out-Schnittstelle zur Weiterleitung der Bilddaten an eine geeignete Zusatzvorrichtung vorgesehen ist.

14. Fernbedienung nach einem der Ansprüche 12 bis 13, **dadurch gekennzeichnet, dass** die Fernbedienung (11) eine Spannungsversorgungseinrichtung (25), insbesondere eine regelbare Spannungsversorgungseinrichtung, umfasst.

15. Fernbedienung nach einem der Ansprüche 12 bis 14, **dadurch gekennzeichnet, dass** die Speichereinheit (17) als Festplattenspeicher oder Wechselspeicher ausgebildet ist.

16. Beobachtungssystem mit Bildaufzeichnungsfunktion umfassend
- die optische Beobachtungsvorrichtung (1) nach einem der Ansprüche 1 bis 11 und
- die Fernbedienung (11) nach einem der Ansprüche 12 bis 15 zum Bedienen der Bildaufzeichnungsfunktion der optischen Beobachtungsvorrichtung (1).
